# EUROPÄISCHE PATENTSCHRIFT

(11) **EP 3 126 481 B1**
(45) Veröffentlichungstag und Bekanntmachung des Hinweises auf die Patenterteilung: **26.09.2018**
(21) Anmeldenummer: 15713176.4
(22) Anmeldetag: 26.03.2015
(51) Int. Cl.: C11D 17/04, B65B 9/04, B29L 31/00, B29C 51/26

(54) **VERFAHREN ZUR HERSTELLUNG VON PORTIONSPACKUNGEN**
METHOD FOR PRODUCING PORTION PACKS
PROCÉDÉ DE FABRICATION DE DOSES PRÉEMBALLÉES

(30) Priorität: 31.03.2014 DE 102014206096
(43) Veröffentlichungstag der Anmeldung: 08.02.2017
(73) Patentinhaber: Henkel AG & Co. KGaA, 40589 Düsseldorf (DE)
(72) Erfinder: SUNDER, Matthias, 40593 Düsseldorf (DE); BLANK, Volker, 51375 Leverkusen (DE); RICHTER, Bernd, 42799 Leichlingen (DE); GERHARDS, Katja, 40547 Düsseldorf (DE); MEIER, Frank, 40589 Düsseldorf (DE); HENNING, Ingomar, 50933 Köln (DE)
(86) Internationale Anmeldenummer: PCT/EP2015/056585
(87) Internationale Veröffentlichungsnummer: WO 2015/150230

(56) Entgegenhaltungen:
- EP-A1- 1 829 954
- EP-A1- 2 617 659
- WO-A1-2008/087420
- DE-A1-102012 212 842
- GB-A- 2 374 580

## Beschreibung

Die Erfindung betrifft ein Verfahren zur Herstellung von Portionspackungen, vorzugsweise Portionspackungen mit Wasch-und/oder Reinigungsmitteln.

### Stand der Technik

Wasch- oder Reinigungsmittel sind heute für den Verbraucher in vielfältigen Angebotsformen erhältlich. Neben Pulvern und Granulaten umfasst dieses Angebot beispielsweise auch Flüssigkeiten, Gele oder Portionspackungen, wie z.B. (Tabletten oder gefüllte Beutel). Insbesondere Portionspackungen in Form von wasserlöslichen Verpackungen mit flüssigen Wasch- oder Reinigungsmitteln werden immer beliebter, erfüllen sie einerseits den Wunsch des Verbrauchers nach vereinfachter Dosierung und andererseits bevorzugen immer mehr Verbraucher flüssige Wasch- oder Reinigungsmittel. Herstellungsverfahren für beutelartige Portionspackungen sind aus dem Stand der Technik bekannt. Zum Beispiel offenbart DE1287502 ein Verfahren zum Herstellen von Tiefziehpackungen mit wasserlöslichen Folien. Die Packungen werden auf einer Trommel hergestellt. Auch offenbart EP1360110 so ein Verfahren, mit dem Unterschied, dass die Formen auf einem Laufband statt auf einer Trommel laufen.

GB-A-2 374 580 zeigt wasserlösliche Verpackungen, die aus einer oberen und unteren Folie bestehen, die unterschiedlichen Stärken aufweisen. Aufgabe der Erfindung ist es daher, ein Verfahren zur Herstellung von Portionspackungen anzugeben, mit dem Portionspackungen mit verbesserten Eigenschaften hergestellt werden können.

Diese Aufgabe wird durch ein Verfahren mit den Merkmalen von Anspruch 1 gelöst und durch eine Portionspackung nach Anspruch 11. Die abhängigen Ansprüche beziehen sich auf weitere bevorzugte Ausführungen der Erfindung.

Das Verfahren zur Herstellung von Portionspackungen ist vorzugsweise für Wasch-und/oder Reinigungsmittel-Portionspackungen geeignet. Die Portionspackungen enthalten ein Produkt, vorzugsweise ein Waschmittel und/oder ein Reinigungsmittel. Das Verfahren umfasst die Schritte:
a) Bereitstellen einer Form mit mindestens einer Formmulde;
b) Zuführen einer wasserlöslichen Folie auf die Formmulde;
c) Ausbilden einer offenen Kammer in die Formmulde, durch Verformung der wasserlöslichen Folie;
d) Befüllen der offenen Kammer mit Produkt;
e) Positionieren eines wasserlöslichen und formstabilen Deckels über der offenen Kammer;
f) Aufbringen des Deckels auf die Kammer zur Versiegelung der Portionspackung an einen Versiegelungsbereich.

Das Produkt ist vorzugsweise ein Wasch und/oder Reinigungsprodukt. In einer Ausführung der Erfindung ist das Produkt ein Waschmittel. In einer weiteren Ausführung der Erfindung ist das Produkt ein Reinigungsmittel, vorzugsweise ein Geschirrspülmittel.

Die Form umfasst mindestens eine Mulde (Formmulde). Die Form kann zum Beispiel als eine einzelne Form oder auch Teil einer Anreihung von Formen in Form eines Laufbands bereitgestellt werden, wie es aus dem Laufbandverfahren und aus dem Trommelverfahren bekannt ist. Die Form umfasst einen Bereich auf dem die Folie aufgelegt werden kann, z.B. einen Siegelbereich der typischerweise um die Öffnung einer Formmulde herum definiert ist. Die Formmulde kann verschiedene Geometrien aufweisen, falls Kanten vorhanden sind, ist es vorteilhaft, dass diese abgerundet sind. Abgerundete Kanten und/oder kuppelförmige Mulden dienen dazu, dass beim Ziehen der Folie in die Mulde, die Folie etwas homogener gezogen wird, und dadurch die Folienstärke insofern gleichmäßig bleibt, und dass keine Bruch-oder-Reißstellen erzeugt werden, was wiederum zu einer stabileren Portionspackung führt.

Die wasserlösliche Folie kann aus einer Rolle zugeführt werden und auf die Formmulde geführt werden. Die Folie wird auf der Form positioniert und festgehalten. Das Festhalten kann durch Sauglöcher auf der Formfläche, die nicht Teil der Formmulde ist, stattfinden. Die Folie kann aber auch durch mechanische Mittel auf der Form gehalten werden, wie zum Beispiel Klammern. Zum Beispiel, kann die Folie durch einen Stempel, der auf den Siegelbereich drückt, festgehalten werden. Bei den kontinuierlichen Herstellverfahren, wie z.B. Trommelverfahren und Laufbandverfahren, ist es bevorzugt, dass die Geschwindigkeit der Folie an die Geschwindigkeit des aus den Formen gebildetes Laufbandes angepasst ist, damit die Folie nicht unnötig, durch das Festhalten an einer laufenden Form, dünner gezogen wird.

Nachdem die Folie auf einer Stelle, relativ zur Formmulde, festgehalten wird, wird in dem Formmuldenbereich eine Kammer ausgebildet, indem die Folie mindestens teilweise, an die Formmulde angepasst wird. Die Anpassung wird durch eine elastische und/oder plastische Verformung erzeugt. Vorzugsweise weist die Folienverformung einen größeren plastischen als elastischen Anteil auf. Die Verformung der wasserlöslichen Folie wird z.B. durch Tiefziehen oder mittels geeigneter Stempel erzeugt. Eine bevorzugte Variante ist das Tiefziehen, durch Beaufschlagung von Unterdruck (Formierdruck) in der Formmulde, dazu umfasst die Formmulde vorzugsweise kleine Öffnungen, vorzugsweise im Bodenbereich, die durch entsprechende Leitungen luftdruckmäßig an eine Vakuumpumpe angeschlossen sind.

Nach dem Ausbilden der offenen Kammer wird diese mit Produkt gefüllt. Dabei wird vorzugsweise die verformte Folie während des Füllens weiterhin in der Mulde gehalten. Zum Beispiel, bei Unterdruckbeaufschlagung wird der Unterdruck erst nach der Versiegelung gebrochen. Wobei der Unterdruck nach dem Ausbilden der Kammer im Verhältnis zu dem Formierdruck, eine geringere Stärke (höherer Druck) aufweisen kann, der nur noch die Haltefunktion erfüllt.

Die Kammer wird durch Einfließen von Produkt gefüllt. Dazu muss das Produkt, in dem Zustand in dem es einfließen soll, fließfähig, flüssig, schüttfähig, oder rieselfähig sein. Alternativ, kann das Produkt als Block in die Kammer reingesetzt, und somit befüllt, werden.

Es ist wichtig, dass der Siegelbereich frei von Produkt bleibt. Zum Beispiel, falls die Kammer mindestens teilweise elastisch verformt ist, darf diese elastische Verformung nach der Befüllung und vor der Versiegelung nicht derart nachlassen, dass das Produkt über und aus der offenen Kammer fließt und damit den Siegelbereich verunreinigt.

Der Deckel wird auf der offenen Kammer positioniert, so dass in dem nächsten Schritt der Deckel auf dem Versiegelungsbereich aufgebracht werden kann. Die Position des Deckels bestimmt sich allgemein relativ zur Position der Kammer. Falls die Kammer sich mit einer beweglichen Form in einem Laufband bewegt, muss sich der Deckel gleichermaßen bewegen damit die relative Position zur Kammer gleich bleibt.

Der Deckel wird dann auf die offene Kammer aufgebracht, welche auf diesem Wege verschlossen wird. Der Kontakt zwischen Deckel und Folie im Versiegelungsbereich schließt somit die Kammer. Eine bevorzugte Ausführung der Versiegelung ist eine Stoffverschmelzung zwischen Folie und Deckel, zum Beispiel durch Anlösen der Folie vor dem Aufbringen des Deckels, oder durch Anschmelzen von Folie und/oder Deckel im Versiegelbereich. Alternativ, erfolgt die Versiegelung durch Kleben, oder Schweißen.

Das Positionieren, Aufbringen, und Versiegeln kann entweder in getrennten Schritten oder gleichzeitig stattfinden.

Die Form kann auch mindestens eine zweite Formmulde umfassen, so, dass durch Verfahrensschritte a) bis d) mindestens zwei offene Kammern erzeugt werden. Die mindestens zwei Kammern werden in derselben Ebene geformt. Es wird bevorzugt, dass der Deckel im Verfahrensschritt e) über die mindestens zwei offenen Kammern positioniert wird und der Deckel im Verfahrensschritt f) auf mindestens beide Kammern zur Versiegelung der Portionspackung an einem Versiegelungsbereich (13) aufgebracht wird. Da die mindestens zwei Kammer mit demselben Deckel verbunden sind, bleiben die Kammer in einer bestimmten Position zueinander, im Gegenteil zum Stand der Technik wo nebeneinander liegende Kammern durch den Steg, der durch den dünnen Folien der Verpackungen geformt ist, verbunden sind.

Der Deckel wird als Teil eines Bandes bereitgestellt, durch zuführen/überführen von einem Band das mindestens einen Deckel umfasst. Die Vereinzelung des Deckels kann vor dem Positionieren, nach dem Positionieren aber vor dem Aufbringen, während des Aufbringens, oder nach dem Aufbringen auf die Kammer stattfinden.

Bei einer Vereinzelung vor dem Positionieren wird der Deckel vorzugsweise ausgestanzt.

Deckel und Folie können auch gleichzeitig mit dem Versiegeln getrennt werden. Die Vorrichtung die das Versiegeln durch Anschmelzen erzeug besteht aus mindestens zwei Teilen, das eine ist die Form selber und das weitere Teil ist ein Gegenstempel der von der Deckelseite auf die Form drückt. Dabei ist es bevorzugt, dass beim Versiegelungsschritt der Druck, der während des Versiegelns durch Form und weiteres Teil ausgeübt wird, am Versiegelungsbereich geringer sein muss als der Druck der im Vereinzelungsbereich ausgeübt wird. Dabei umgibt der Vereinzelungsbereich den Versiegelungsbereich.

Bei einer Vereinzelung nach dem Versiegeln, werden Deckel und Folie alternativ vorzugsweise im gleichen Schritt aus dem Band getrennt und somit die Portionspackungen vereinzelt.

Es wurde überraschend festgestellt, dass ein Deckelband mit versiegelten Kammern, nach der Versiegelung viel besser zu handhaben ist, wenn der Deckelbandbereich zwischen den Deckeln starrer ist als die Folie der Portionspackung. Das gesamte Band mit versiegelten Portionspackungen ist starrer und kann somit besser geführt werden. Dies ist insbesondere vorteilhaft falls das Band in einer folgenden Station geführt werden muss, z.B. um weitere Verfahrensschritte durchzuführen, wie vorzugsweise ausgewählt aus: Bedrucken, Qualitätskontrolle, Vereinzelung falls erforderlich. Das Band kann ein kontinuierliches Fertigungsband sein oder ein Segment, mit mehreren Portionspackungen, welches statt geführt auch einzeln oder gestapelt von einer Station zur Nächsten bewegt wird.

Um eine gute Formstabilität, wie Starrheit, zu bekommen ist es bevorzugt dass, bei etwa gleichen Materialien der Deckel und der Folie, z.B. PVA, die Stärke des Deckelbandbereichs wenigstens der doppelten Folienstärke entspricht (z.B. 200 µm bei einer Folienstärke von 100 µm), aber mindestens 100 µm beträgt.

In einer Weiterentwicklung der Erfindung, wird ein Bandsegment von versiegelten Portionspackungen erzeugt. Das Segment ist vorzugsweise eine Reihe von mindestens 4 Portionspackungen, die jeweils eine oder mehrere Kammern aufweisen können. Die Folie ist zwischen den Portionspackungen getrennt. Der Deckelbandbereich ist eine lösbare, vorzugsweise abbrechbare oder abreißbare Verbindung und umfasst vorzugsweise eine Sollbruch- oder Reißstelle. Dabei kann der Verbraucher, vor dem Verbrauch, eine Portionspackung aus dem Segment abbrechen und verwenden.

Die Sollbruchstelle kann beim Versiegeln hergestellt werden. Beim Schmelzversiegeln kann gleichzeitig die Folie durchtrennt werden.

Alternativ kann beim Durchschneiden der Folie das Messer den Deckel anschneiden und somit die Sollbruchstelle erzeugen.

Der Deckel umfasst eine Innenseite, die Richtung Kammerinneren zugewandt ist und eine Außenseite die, von dem Kammerinneren abgewandt ist, wobei die Innenseite vorzugsweise topologisch an dem Versiegelungsbereich angepasst ist. Mit der topologischen Anpassung wird beim Aufbringen des Deckels auf die Kammer eine zusätzliche Feinjustierung überflüssig, weil durch die Deckeltopologie eine Selbst-Feinjustierung stattfindet.

In dem erfindungsgemäßen Verfahren wird vorzugsweise, zusammen mit der Portionspackung, neben dieser mindestens eine zweite Portionspackung gleichzeitig hergestellt. Dies ist besonders bevorzugt, bei Verwendung des Laufbandverfahrens.

Ergänzend oder alternativ, wird in dem erfindungsgemäßen Verfahren vorzugsweise, zusammen mit der Portionspackung, hinter dieser mindestens eine zweite Portionspackung hergestellt.

Die erfindungsgemäße Portionspackung ist vorzugsweise eine Wasch- und/oder Reinigungsmittelportionspackung, umfassend eine Kammer, die umhüllt ist durch eine wasserlöslichen Folie und einen an der wasserlöslichen Folie angebrachten Deckel, wobei die Kammer ein Produkt enthält. Das Produkt ist vorzugsweise ein Wasch- und/oder Reinigungsprodukt. In einer Ausführung der Erfindung ist das Produkt ein Waschmittel. In einer weiteren Ausführung der Erfindung ist das Produkt ein Reinigungsmittel, vorzugsweise ein Geschirrspülmittel.

Die Portionspackung umfasst vorzugsweise die für einen Wasch- oder Reinigungsgang notwendige Menge an Produkt. Bevorzugte Portionspackungen weisen ein Gewicht zwischen 12 und 30 g, bevorzugt zwischen 14 und 26 g und insbesondere zwischen 16 und 22 g auf.

In der Erfindung wird generell bevorzugt, dass die Portionspackung ein wasserreaktiver Beutel ist. Unter wasserreaktiven Beuteln wird verstanden, dass der Beutel mit Wasser reagiert, so dass bei Kontakt vom Beutel mit Wasser, der Inhalt des Beutels mindestens teilweise freigesetzt wird. Eine bevorzugte Ausführung der Wasserreaktivität ist die Wasserlöslichkeit, hier wird die Folie die den Beutel bildet vorzugsweise vollständig in einer Menge Wasser aufgelöst.

### Folienmaterial

In einem Ausführungsbeispiel wird die wasserlösliche Folie aus einem wasserlöslichen Folienmaterial ausgewählt aus der Gruppe, bestehend aus Polymeren oder Polymergemischen gebildet. Die Folie kann aus einer oder aus zwei oder mehr Lagen aus dem wasserlöslichen Folienmaterial gebildet werden. Das wasserlösliche Folienmaterial der ersten Lage und der weiteren Lagen, falls vorhanden, kann gleich oder unterschiedlich sein.

Die wasserlösliche Folie kann Polyvinylalkohol oder ein Polyvinylalkoholcopolymer enthalten. Wasserlösliche Folien, die Polyvinylalkohol oder ein Polyvinylalkoholcopolymer enthalten, weisen eine gute Stabilität bei einer ausreichend hohen Wasserlöslichkeit, insbesondere Kaltwasserlöslichkeit, auf.

Geeignete wasserlösliche Folien basieren bevorzugt auf einem Polyvinylalkohol oder einem Polyvinylalkoholcopolymer, dessen Molekulargewicht im Bereich von 10.000 bis 1.000.000 gmol⁻¹, vorzugsweise von 20.000 bis 500.000 gmol⁻¹, besonders bevorzugt von 30.000 bis 100.000 gmol⁻¹ und insbesondere von 40.000 bis 80.000 gmol⁻¹ liegt.

Die Herstellung von Polyvinylalkohol geschieht üblicherweise durch Hydrolyse von Polyvinylacetat, da der direkte Syntheseweg nicht möglich ist. Ähnliches gilt für Polyvinylalkoholcopolymere, die aus entsprechend aus Polyvinylacetatcopolymeren hergestellt werden. Bevorzugt ist, wenn wenigstens eine Lage der wasserlöslichen Folie einen Polyvinylalkohol umfasst, dessen Hydrolysegrad 70 bis 100 Mol-%, vorzugsweise 80 bis 90 Mol-%, besonders bevorzugt 81 bis 89 Mol-% und insbesondere 82 bis 88 Mol-% ausmacht.

Einem zur Herstellung der wasserlöslichen Folie geeignetem Polyvinylalkohol-enthaltendem Folienmaterial kann zusätzlich ein Polymer ausgewählt aus der Gruppe umfassend (Meth)Acrylsäure-haltige (Co)Polymere, Polyacrylamide, Oxazolin-Polymere, Polystyrolsulfonate, Polyurethane, Polyester, Polyether, Polymilchsäure oder Mischungen der vorstehenden Polymere zugesetzt sein.

Bevorzugte Polyvinylalkoholcopolymere umfassen neben Vinylalkohol Dicarbonsäuren und deren Derivate (z.B. Ester oder Amide) als weitere Monomere. Geeignete Dicarbonsäure sind Itaconsäure, Maleinnsäure, Fumarsäure und Mischungen daraus, wobei Maleinsäure und Itaconsäure bevorzugt werden.

Ebenfalls bevorzugte Polyvinylalkoholcopolymere umfassen neben Vinylalkohol eine ethylenisch ungesättige Carbonsäure, deren Salz oder deren Ester. Besonders bevorzugt enthalten solche Polyvinylalkoholcopolymere neben Vinylalkohol Acrylsäure, Methacrylsäure, Acrylsäureester, Methacrylsäureester oder Mischungen daraus.

Es kann bevorzugt sein, dass das Folienmaterial weitere Zusatzstoffe enthält. Das Folienmaterial kann beispielsweise Weichmacher wie Dipropylenglycol, Ethylenglycol, Diethyleneglycol, Propylenglycol, Glycerin, Sorbitol, Mannitol oder Mischungen daraus enthalten. Weitere Zusatzstoffe umfassen beispielsweise Freisetzungshilfen, Füllmittel, Vernetzungsmittel, Tenside, Antioxidationsmittel, UV-Absorber, Antiblockmittel, Antiklebemittel, Bitterstoffe oder Mischungen daraus.

Geeignete wasserlösliche Folien zum Einsatz in dem vorliegenden Verfahren sind Folien, die von der Firma MonoSol LLC beispielsweise unter der Bezeichnung M8630, C8400 oder M8900 vertrieben werden. Andere geeignete Folien umfassen Folien mit der Bezeichnung Solublon® PT, Solublon® GA, Solublon® KC oder Solublon® KL von der Aicello Chemical Europe GmbH oder die Folien VF-HP von Kuraray.

Gemäß einer weiteren Ausführungsform kann die wasserlösliche Folie - zumindest teilweise - auch aus einem zellstoffbasierten Material gebildet sein. Das zellstoffbasierte Material kann insbesondere ein wasserlösliches Papier sein. In diesem Zusammenhang ist es besonders zu bevorzugen, dass die wasserlösliche Folie vollständig aus einem wasserlöslichen Papier gebildet ist. Insbesondere ist es bevorzugt, dass das wasserlösliche Papier bedruckt ist.

### Deckel und Deckelmaterial

Der Deckel ist Formstabil, selbstverständlich bezieht sich das auf die ungelöste und auch nicht-angelöste Form.

Der Deckel ist generell wasserlöslich. In einem Ausführungsbeispiel wird der wasserlösliche Deckel aus einem wasserlöslichen Material ausgewählt aus der Gruppe, bestehend aus Polymeren oder Polymergemischen gebildet.

Der wasserlösliche Deckel kann Polyvinylalkohol oder ein Polyvinylalkoholcopolymer enthalten. Wasserlösliche Deckel, die Polyvinylalkohol oder ein Polyvinylalkoholcopolymer enthalten, weisen eine gute Stabilität bei einer ausreichend hohen Wasserlöslichkeit, insbesondere Kaltwasserlöslichkeit, auf.

Geeignetes Material zur Herstellung des wasserlöslichen Deckels basieren bevorzugt auf einem Polyvinylalkohol oder einem Polyvinylalkoholcopolymer, dessen Molekulargewicht im Bereich von 10.000 bis 1.000.000 gmol⁻¹, vorzugsweise von 20.000 bis 500.000 gmol⁻¹, besonders bevorzugt von 30.000 bis 100.000 gmol⁻¹ und insbesondere von 40.000 bis 80.000 gmol⁻¹ liegt.

Die Herstellung von Polyvinylalkohol geschieht üblicherweise durch Hydrolyse von Polyvinylacetat, da der direkte Syntheseweg nicht möglich ist. Ähnliches gilt für Polyvinylalkoholcopolymere, die aus entsprechend aus Polyvinylacetatcopolymeren hergestellt werden. Bevorzugt ist, wenn wenigstens eine Lage der wasserlöslichen Folie einen Polyvinylalkohol umfasst, dessen Hydrolysegrad 70 bis 100 Mol-%, vorzugsweise 80 bis 90 Mol-%, besonders bevorzugt 81 bis 89 Mol-% und insbesondere 82 bis 88 Mol-% ausmacht.

Einem zur Herstellung des wasserlöslichen Deckels geeignetem Polyvinylalkohol-enthaltendem Folienmaterial kann zusätzlich ein Polymer ausgewählt aus der Gruppe umfassend (Meth)Acrylsäure-haltige (Co)Polymere, Polyacrylamide, Oxazolin-Polymere, Polystyrolsulfonate, Polyurethane, Polyester, Polyether, Polymilchsäure oder Mischungen der vorstehenden Polymere zugesetzt sein.

Bevorzugte Polyvinylalkoholcopolymere umfassen neben Vinylalkohol Dicarbonsäuren als weitere Monomere. Geeignete Dicarbonsäure sind Itaconsäure, Maleinnsäure, Fumarsäure und Mischungen daraus, wobei Maleinsäure und Itaconsäure bevorzugt werden.

Ebenfalls bevorzugte Polyvinylalkoholcopolymere umfassen neben Vinylalkohol eine ethylenisch ungesättige Carbonsäure, deren Salz oder deren Ester. Besonders bevorzugt enthalten solche Polyvinylalkoholcopolymere neben Vinylalkohol Acrylsäure, Methacrylsäure, Acrylsäureester, Methacrylsäureester oder Mischungen daraus.

Es kann bevorzugt sein, dass das Deckelmaterial weitere Zusatzstoffe enthält. Das Deckelmaterial kann beispielsweise Freisetzungshilfen, Füllmittel, Vernetzungsmittel, Tenside, Antioxidationsmittel, UV-Absorber, Antiblockmittel, Antiklebemittel, Bitterstoffe oder Mischungen daraus umfassen.

Geeignete wasserlösliches Material zum Einsatz in dem vorliegenden Verfahren ist: Mowiflex TC232 und TC253, Fa. Kuraray
1. Mowiol 3/83 Teilhydrolisiertes PVA 83% ∼ 14000 g/mol
2.Mowiol 4/88 s.o 88% ∼ 31000 g/mol
3. Vinex 2019 PVA mit Weichmacher (Texas Polymers)
4. Vinex 2034 PVA mit Weichmacher (Texas Polymers)
5. Luviskol VA 64 PVP/PVA Copolymer
6. Mowiol 8/88
7. Mowiflex LP TC 221
8. Clariant KSE Compound 726
9. Clariant.KSE Compound 734
10. Clariant KSE Compound 740
11. Clariant L633
12. FB 200 ex Kuraray
13. Vinex 2025

Der Deckel hat eine Dicke von 150µm-3000 µm, vorzugsweise 150µm-1000 µm. Es wird bevorzugt, dass der Deckel spritzgegossen ist. Durch Spritzgießen wird ein hochwertiger Deckel hergestellt mit sehr geringer Materialverschwendung. Spritzgegossene Deckel weisen sehr definierte Deckel-Wanddicke und Konturen auf.

Der Deckel, insbesondere der spritzgegossene Deckel, besteht vorzugsweise aus PVA oder geeigneten PVA-Copolymeren, oder deren Mischung, vorzugsweise beinhaltend weitere Komponente wie z.B. mit Acrylsäure, sowie weiteren Zuschlagsstoffen, bspw. Glycerin, Sorbitol, welche das Polymer extrudierbar und spritzgußfähig machen.

In einer alternativen, aber weniger bevorzugten Ausführung, wird der Deckel gestanzt, vorzugsweise aus einer Platte gestanzt. Obwohl bei Stanzen etwas mehr Material verbraucht wird, kann das Stanzen sehr schnell, aus einer Platte, erfolgen. Die ausgestanzte Platte kann durch Recycling wieder verwertet werden.

Die Außenseite des Deckels weist eine Markierung auf, die somit die Portionspackung attraktiv für Konsumenten macht. Beispiele für Markierungen sind Tropfen, Blasen, Wellen, Blumen. Solche eine Markierung erzeugt dem Verbraucher einen Eindruck einer verstärkten Reinigung und/oder Frische, damit kann bei der Herstellung an Wasch- und/oder Reinigungsmittle gespart werden.

Es wird besonders bevorzugt, dass in alle Ausführungen der Erfindung, eine Markierung auf dem Deckel erzeugt wird. Die Markierung wird vorzugsweise vor Schritt f) erzeugt, weiterhin bevorzugt bei Herstellung des Deckels, insbesondere beim Spritzgießen. Alternativ, wird die Markierung bei Ausstanzen des Deckels aus einer Platte geformt.

### Wasch und/oder Reinigungsmittel

Eine Kammer der erfindungsgemäßen Portionspackung enthält ein flüssiges oder festes Wasch und/oder Reinigungsmittel.

Unter "flüssig" wird mit Blick auf das besagte Reinigungsmittel erfindungsgemäß verstanden, dass das Wasch und/oder Reinigungsmittel bei einer Temperatur von 20°C fließfähig ist.

Unter "fest" wird mit Blick auf das besagte Reinigungsmittel erfindungsgemäß verstanden, dass das Wasch und/oder Reinigungsmittel als Pulver, Granulat oder als Block vorliegt.

Die besagten Wasch- und/oder Reinigungsmittel können Wasser enthalten. Wenn die erfindungsgemäße Umhüllung (Deckel und Folie) wasserlöslich ist, so ist zu beachten, dass das besagte Wasch- und/oder Reinigungsmittel Wasser in einer solchen Menge enthält, so dass sich die Folie bei Kontakt mit dem besagten Reinigungsmittel nicht auflöst. Wird ein wasserlösliches Material für die erfindungsgemäße Umhüllung (Deckel und Folie) eingesetzt, so ist es bevorzugt, wenn besagtes Reinigungsmittel einen Gehalt an Wasser von weniger als 15 Gew.-%, bevorzugt von weniger als 10 Gew.-% und mehr bevorzugt von weniger als 8 Gew.-%, jeweils bezogen auf das gesamte flüssige Wasch und/oder Reinigungsmittel, aufweist. Alternativ kann durch den Einsatz von Salzen in der Rezeptur die Aktivität von Wasser auch soweit erniedrigt werden, dass ein Mittel in einem solchen Fall bis zu 30 Gew% Wasser enthalten kann.

Die erfindungsgemäßen Portionspackungen sind sowohl für das manuelle wie auch für das maschinelle Waschen und Reinigen von Gegenständen mit weichen und harten Oberflächen geeignet. Sie finden vorzugsweise Verwendung beim manuellen oder maschinellen Waschen von Textilien sowie beim manuellen oder maschinellen Reinigen von Geschirr. Gegebenenfalls finden sie Verwendung in Kombination mit weiteren Wasch- und/oder Reinigungsmittelportionen. Als besagtes Wasch und/oder Reinigungsmittel eignen sich somit insbesondere flüssige Reinigungsmittel für harte Oberflächen (wie beispielsweise Geschirrreiniger oder Haushaltsreiniger), sowie flüssige Textilwaschmittel.

### Waschmittel bevorzugt Textilwaschmittel - Flüssig

Das besagte Wasch und/oder Reinigungsmittel liegt im Rahmen einer bevorzugten Ausführungsform als flüssiges Textilwaschmittel vor. Dabei gilt für dessen Inhaltsstoffe, dass sie die strukturelle Integrität der gegebenenfalls wasserlöslichen Umhüllung (Deckel und Folie) nicht zerstören. Ist das eingesetzte Mittel ein flüssiges Waschmittel kann es einen oder mehrere Stoffe aus der Gruppe der Tenside, Gerüststoffe, Bleichmittel, Bleichaktiva-toren, Bleichkatalysatoren, Enzyme, Enzymstabilisatoren, Elektrolyte, pH-Stellmittel, Parfüme, Parfümträger, Fluoreszenzmittel, Farbstoffe, Hydrotope, Schauminhibitoren, Silikonöle, Antiredepositionsmittel, Vergrauungsinhibitoren, Einlaufverhinderer, Knitterschutzmittel, Farbübertragungsinhibitoren, antimikrobiellen Wirkstoffe, nicht-wässrigen Lösungsmittel, Germizide, Fungizide, Antioxidantien, Konservierungsmittel, Korrosionsinhibitoren, Antistatika, Bittermittel, Bügelhilfsmittel, Phobier- und Imprägniermittel, Trübungsmittel, Haut-pflegende Wirkstoffe, Quell- und Schiebefestmittel, weichmachenden Komponenten, Füllstoffe sowie UV-Absorber enthalten.

Insbesondere ist es bevorzugt, dass die besagten Textilwaschmittel ohne Zusatz weiterer Wasch- oder Reinigungsmittel ihrem Verwendungszweck zugeführt werden.

Die in den Portionspackungen vorhandenen, flüssigen Textilwaschmittel können 1 bis 80 Gew.-% Tenside ausgewählt aus der Gruppe, bestehend aus anionischen, nichtionischen, kationischen, zwitterionischen Tensiden und amphoteren Tensiden sowie Mischungen daraus sowie Seifen, aufweisen. Sie sind vorzugsweise in einer Gesamtmenge bis 50 Gew.-% enthalten. Bevorzugt einsetzbare Aniontenside sind Seifen, Alkylbenzolsulfonate, Alkansulfonate, Methylestersulfonate, α-Olefinsulfonate, Alkylsulfate und Fettalkohol-polyglycolethersulfate. Bevorzugt ein-setzbare Niotenside sind Fettalkoholpolyglycolether (Fettalkoholethoxylate), Alkylphenolpolyglycolether, Fettsäureethoxylate, Fettaminethoxylate, ethoxylierte Triacylglycerole und Mischether (beidseitig alkylierte Polyethylenglycolether), Alkylpolyglucoside, Saccharoseester, Sorbitanester, FettsäureN-methylglucamide sowie Aminoxide.

Unter "Seifen" werden Salze von Fettsäuren verstanden. Die Na- oder K- oder Ammonium-Salze von Fettsäuren, insbesondere von C12-18 Fettsäuren, eignen sich erfindungsgemäß bevorzugt. Ganz besonders bevorzugt ist es, wenn besagtes Textilwaschmittel als ein anionisches Tensid Seife (insbesondere in Mengen von 0,5 bis 30 Gew. %, in weiter vorteilhafter Weise 1 bis 25 Gew-%, insbesondere in Mengen von 5 bis 18 Gew.-%, bezogen auf das gesamte Mittel) enthält. Ganz besonders bevorzugt ist es, wenn besagtes Textilwaschmittel Alkylbenzolsulfonat enthält, vorzugsweise lineares Alkylbenzolsulfonat (LAS), und/oder Alkylsulfate vorteilhafterweise in Mengen von 0,1 bis 30 Gew. %, in weiter vorteilhafter Weise 5 bis 25 Gew-%, insbesondere in Mengen von 5 bis 20 Gew.-%, bezogen auf das gesamte Mittel.

Es ist weiterhin bevorzugt, dass das besagte Textilwaschmittel nichtionisches Tensid enthält, insbesondere in Mengen von 0,01 bis 30 Gew. %, besonders bevorzugt 5,0 bis 25 Gew.-%, jeweils bezogen auf das gesamte Mittel. Als nichtionisches Tensid wird insbesondere ethoxylierter Fettalkohol bevorzugt. Die Kombination von LAS und/oder Alkylsulfaten mit ethoxyliertem Fettalkohol ist besonders bevorzugt.

Als bevorzugtes nichtionisches Tensid enthalten die besagten Textilwaschmittel mindestens ein Fettalkoholalkoxylat der Formel

R2-O-(AO)m-H,

in der
- R2: für einen linearen oder verzweigten, substituierten oder unsubstituierten Al-kylrest,
- AO: für eine Ethylenoxid- (EO) oder Propylenoxid- (PO) Gruppierung,
- m: für ganze Zahlen von 1 bis 50 stehen.

In der vorstehend genannten Formel steht R2 für einen linearen oder verzweigten, substituierten oder unsubstituierten Alkylrest, vorzugsweise für einen linearen, un-substituierten Alkylrest, besonders bevorzugt für einen Fettalkoholrest. Bevorzugte Reste R2 sind ausgewählt aus Decyl-, Undecyl-, Dodecyl-, Tridecyl-, Tetradecyl, Pentadecyl-, Hexadecyl-, Heptadecyl-, Octadecyl-, Nonadecyl-, Eicosylresten und deren Mischungen, wobei die Vertreter mit gerader Anzahl an C-Atomen bevorzugt sind. Besonders bevorzugte Reste R2 sind abgeleitet von C12-C18-Fettalkoholen, beispielsweise von Kokosfettalkohol, Talgfettalkohol, Lauryl-, Myristyl-, Cetyl- oder Stearylalkohol oder von C10-C20-Oxoalkoholen.

AO steht für eine Ethylenoxid- (EO) oder Propylenoxid- (PO) Gruppierung, vorzugsweise für eine Ethylenoxidgruppierung. Der Index m steht für eine ganze Zahl von 1 bis 50, vorzugsweise von 1 bis 20 und insbesondere von 2 bis 10. Ganz besonders bevorzugt steht m für die Zahlen 2, 3, 4, 5, 6, 7 oder 8.

Die anionischen Tenside, wie auch die ursprünglich eingesetzten Seifen, können in Form ihrer Natrium-, Kalium-, Magnesium- oder Ammoniumsalze vorliegen. Vorzugsweise liegen die anionischen Tenside in Form ihrer Natriumsalze vor. Weitere bevorzugte Gegenionen für die anionischen Tenside sind auch die protonierten Formen von Cholin, Triethylamin, Monoethanolamin (MEA), Triethanolamin (TEA) oder Methylethylamin.

Ferner können die besagten Textilwaschmittel zusätzlich mindestens ein aminogruppenfreies, organisches Lösemittel mit 2 bis 6 Kohlenstoffatomen (bevorzugt in einer Menge von 1,0 bis 25 Gew.-%, besonders bevorzugt in einer Menge von 5,0 bis 20 Gew.-%, ganz besonders bevorzugt in einer Menge von 7,5 bis enthalten.

Das besagte Lösemittel wird bevorzugt ausgewählt aus Ethanol, Glyzerin, 1,2-Propylenglykol und Gemischen daraus.

Das in der erfindungsgemäßen Portionspackung konfektionierte, flüssige Textilwaschmittel weist vorzugsweise einen pH-Wert in dem Bereich von 6 bis 10, insbesondere von 7,5 bis 10 auf.

Eine bevorzugte Ausführungsform eines für die erfindungsgemäße Portionspackung geeigneten flüssigen Textilwaschmittels enthält bezogen auf das Gesamtgewicht des besagten Textilwaschmittels
- 0,1 bis 30 Gew. %, in weiter vorteilhafter Weise 5 bis 25 Gew-%, insbesondere in Mengen von 5 bis 20 Gew.-% Alkylsulfat und/oder Alkylbenzolsulfonat enthält (vorzugsweise lineares Alkylbenzolsulfonat (LAS)),
- 0,01 bis 30 Gew. %, besonders bevorzugt 5,0 bis 25 Gew.-%, nichtionisches Tensid,
- 1,0 bis 30 Gew. %, in weiter vorteilhafter Weise 1 bis 25 Gew-%, insbesondere in Mengen von 5 bis 20 Gew.-%, Seife,
- Wasser in einer Menge von weniger als 15 Gew.-%, bevorzugt von weniger als 10 Gew.-% und mehr bevorzugt von weniger als 8 Gew.-%.

Ein Beispiel für ein in erfindungsgemäßer Portionspackung einsetzbares flüssiges Textilwaschmittel ist:

| Inhaltsstoffe | Gew.-% |
|---|---|
| C10-C13-Alkylbenzolsulfonsäure | 21,0 |
| C13-C15-Alkohol mit 8 EO | 22,5 |
| C12-18-Fettsäure | 17,5 |
| Glycerin | 13,0 |
| 1,2-Propandiol | 13,5 |
| Ethanol | 3,26 |
| Phosphonat | 0,3 |
| Monoethanolamin | 6,4 |
| Farbstoffe, Enzyme (Cellulase, Amylase & Protease), optischer Auf-heller, Parfüm | 0,8 |
| Wasser | 1,74 |

### Geschirrspülmittel

Die Konfektionierung von Geschirrspül-Produkt für die erfindungsgemäße Portionspackung kann in unterschiedlicher Weise erfolgen. Die Mittel im Produkt können in fester oder flüssiger sowie als Kombination fester und flüssiger Angebotsformen vorliegen. Als feste Angebotsformen eignen sich insbesondere Pulver, Granulate, Extrudate, Kompaktate, insbesondere Tabletten. Die flüssigen Angebotsformen auf Basis von Wasser und/oder organischen Lösungsmitteln können verdickt, in Form von Geien vorliegen. Die Mittel können in Form einphasiger oder mehrphasiger Produkte konfektioniert werden. Bevorzugt werden insbesondere maschinelle Geschirrspülmittel mit einer, zwei, drei oder vier Kammern. Maschinelle Geschirrspülmittel, dadurch gekennzeichnet, dass es in Form einer Portionspackung mit zwei oder mehr Kammern vorliegt, werden besonders bevorzugt. Die einzelnen Kammern können Produkte von gleichen oder unterschiedlichen Aggregatzuständen aufweisen. Bevorzugt werden insbesondere Portionspackung mit maschinelle Geschirrspülmittel, die mindestens zwei unterschiedliche feste Phasen und/oder mindestens zwei flüssige Phasen und/oder mindestens eine feste und mindestens eine feste Phase aufweisen, mit einer Phase je Kammer.

### Geschirrspülmittel - Flüssig

Inhaltsstoffe von (insbesondere maschinellen) Geschirrspülmitteln sind bevorzugt ausgewählt aus der Gruppe bestehend aus anionischen, nichtionischen, kationischen und amphoteren Tensiden, insbesondere nichtionischen Klarspültensiden, Buildern, Co-Buildern, Komplexbildnern, pH-Stellmitteln, Bleichmitteln, Bleichaktivatoren, Bleichkatalysatoren, Enzymen, Verdickern, Sequestrierungsmitteln, Elektrolyten, Alkalimetallhydroxiden oder -carbonaten, Korrosionsinhibitoren, insbesondere Silberschutzmitteln, Glaskorrosionsinhibitoren, Schauminhibitoren, Farbstoffen, Duftstoffen, Bitterstoffen, und antimikrobiellen Wirkstoffen.

Eine typische Rahmenrezeptur für ein vorzugsweise einsetzbares maschinelles Geschirrspülmittel, umfasst folgende Stoffe:

| | |
|---|---|
| Tripolyphosphat(e) | 10-40 Gew.-% |
| Sulfopolymer | 2,5-15 Gew.-% |
| Polycarboxylat | 0,1-10 Gew.-% |
| Niotensid(e) | 0,5-10 Gew.-% |
| Phosphonat | 0,5-10 Gew.-% |
| Proteasezubereitung(en) | 0,1-5 Gew.-% |
| Amylasezubereitung(en) | 0,1-5 Gew.-%, |

wobei sich die Angabe in Gew.-% jeweils auf das gesamte Mittel beziehen. Bevorzugt kann statt eines Teils, und insbesondere des kompletten Tripolyphosphats in der Rezeptur, insbesondere auch 10-50 Gew.-% Citrat oder MGDA oder GLDA oder EDDS oder IDS (Iminodibernsteinsäure) oder Mischungen aus zwei oder drei dieser Substanzen eingesetzt werden.

Weiterhin weisen die flüssigen/gelförmigen Formulierungen Lösungsmittel, insbesondere mehrwertige Alkohole oder Gemische, enthaltend diese, auf. Bevorzugt sind 1,2-Propandiol, 1,3-Propandiol, Glycerin, Polyethylenglycole, insbesondere flüssige Polyethylenglycole, Alkanolamine (bevorzugt zwischen 0 und 10 Gew.-%) sowie ggf. Wasser und deren Mischungen, enthalten. Die organischen Lösungsmittel bzw. deren Mischungen sind bevorzugt in einer Gesamtmenge von 5 bis 70 Gew.-% enthalten. Bevorzugt sind Zusammensetzungen (insbesondere solche, die organische Lösungsmittel enthalten) mit einem Wassergehalt von weniger als 24 Gew.-%.

Als nichtionische Tenside können alle dem Fachmann bekannten nichtionischen Tenside eingesetzt werden. Bevorzugt werden schwachschäumende nichtionische Tenside eingesetzt, insbesondere alkoxylierte, vor allem ethoxylierte und/oder propoxylierte, schwachschäumende nichtionische Tenside. Mit besonderem Vorzug enthalten die maschinellen Geschirrspülmittel nichtionische Tenside aus der Gruppe der alkoxylierten Alkohole, beispielsweise solche nichtionische Tenside, die einen C9-15-Alkylrest mit 1 bis 4 Ethylenoxideinheiten, gefolgt von 1 bis 4 Propylenoxideinheiten, gefolgt von 1 bis 4 Ethylenoxideinheiten, gefolgt von 1 bis 4 Propylenoxideinheiten aufweisen, und/oder endgruppenverschlossene polyoxyalkylierte Niotenside, beispielsweise die C4-22 Fettalkohol-(EO)10-80-2-hydroxyalkylether, insbesondere auch die C8-12 Fettalkohol-(EO)22-2-hydroxydecylether und die C4-22 Fettalkohol-(EO)40-80-2-hydroxyalkylether. die C2-26 Fettalkohol-(PO)1-(EO)15-40-2-hydroxyalkylether, insbesondere auch die C8-10 Fettalkohol-(PO)1-(EO)22-2-hydroxydecylether.

Je nach Konfektionierung, z.B. als Feststoff, dispergiert in der Flüssigkeit, können zusätzlich auch Natriumcarbonat zu 5-40 Gew.-%, Natriumpercarbonat zu 5-18 Gew.-%, Bleichaktivator(en) zu 0,5-5 Gew.-% und/oder Bleichkatalysator(en) zu 0,01-1 Gew.-% (jeweils bezogen auf das gesamte Mittel) enthalten sein.

Die Erfindung wird an den nachfolgenden, Ausführungsbeispiele zeigenden Abbildungen näher erläutert.

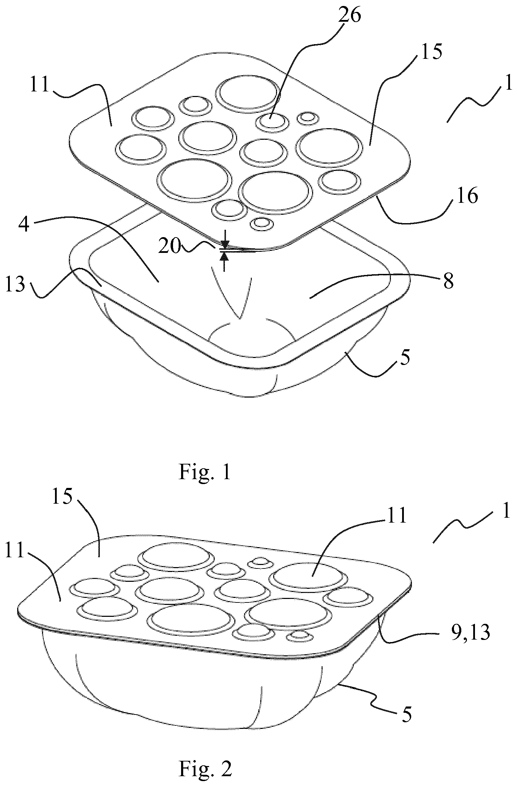

Fig.1 zeigt eine nicht fertiggestellte Portionspackung 1 mit einer geformten wasserlöslichen Folie 5 die eine Kammer 8 aufweist. Das Produkt wird in Fig.1 nicht dargestellt. Über der Kammer 8 ist ein Deckel 11 positioniert, mit einer Wanddicke 20, einer Außenseite 15 und einer Innenseite 16.
Der Deckel umfasst kreisförmige Markierungen 26 auf der Außenseite 15.
Fig.2 zeigt die Portionspackung 1 aus Fig. 1 in der die Folie 5 mit dem Deckel 11 am Versiegelungsbereich 13 versiegelt eist.

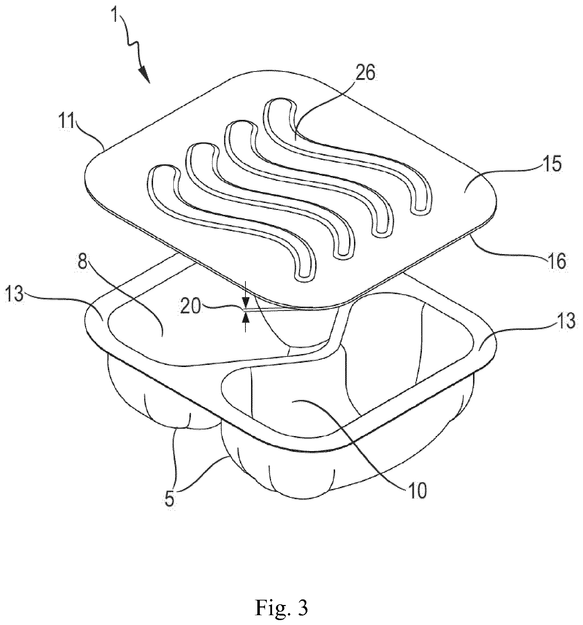

Fig.3 zeigt eine nicht fertiggestellte Portionspackung 1 mit einer geformten wasserlöslichen Folie 5 die eine Kammer 8 und eine weitere Kammer 10 aufweist. Das Produkt der Kammer 8 und ein weiteres Produkt der Kammer 10 werden in Fig.3 nicht dargestellt. Über der Kammer 8 ist ein Deckel 11, mit einer wanddicke 20 eine Außenseite 15 und eine Innenseite 16, Positioniert. Der Deckel umfasst wellenförmige Markierungen 26 auf der Außenseite 15. Der Versiegelungsbereich 13 ist derart ausgestaltet, dass die Folie 5 mit dem Deckel 11 versigelt wird, wobei die Kammer 8 und die weitere Kammer 10 und jeweils das in den Kammern 8,10 befindliches Produkt getrennt voneinander bleiben.

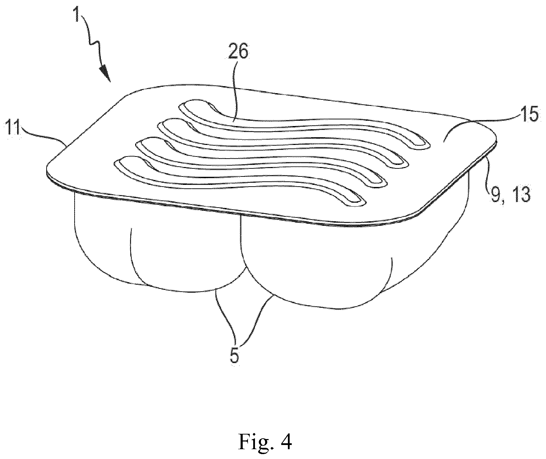

Fig.4 zeigt die Portionspackung 1 aus Fig. 3 in der die Folie 5 mit dem Deckel 11 am Versiegelungsbereich 13 versiegelt ist.

### Beg riffe

- 1: Portionspackung

- 3: Produkt
- 5: wasserlösliche Folie

- 8: Kammer
- 9: Versiegelung
- 10: zweite Kammer
- 11: Deckel

- 13: Versiegelungsbereich

- 15: Außenseite
- 16: Innenseite

- 20: Wanddicke des Deckels
- 26: Markierung

## Patentansprüche

1. Verfahren zur Herstellung von Portionspackungen (1), vorzugsweise Wasch- und/oder Reinigungsmittelportionspackungen, die ein Produkt enthalten, umfassend:
a) Bereitstellen einer Form (6) mit mindestens einer Formmulde;
b) Zuführen einer wasserlöslichen Folie (5) auf die Formmulde;
c) Ausbilden einer offenen Kammer (8) in der Formmulde durch Verformung der wasserlöslichen Folie (5);
d) Befüllen der offenen Kammer (8) mit Produkt;
e) Bereitstellen eines wasserlöslichen und formstabilen Deckels (11) und zwar durch Zuführen/Überführen von einem Band, das mindestens einen Deckel (11) umfasst;
f) Positionieren des Deckels (11) mit einer Dicke von 150-3000µm, vorzugsweise 150-1000µm über der offenen Kammer (8);
g) Aufbringen des Deckels (11) auf die Kammer (8) zur Versiegelung (9) der Portionspackung (1) an einem Versiegelungsbereich (13), wobei der Deckel (11) eine Innenseite (16) umfasst die zur Kammer (8) zugewandt ist und eine Außenseite (15) umfasst die von der Kammer (8) abgewandt ist wobei die Innenseite (16) topologisch an den Versiegelungsbereich (13) angepasst ist, so dass beim Aufbringen des Deckels (11) auf die Kammer (8) durch die Deckeltopologie eine Selbst-Feinjustierung stattfindet.

2. Verfahren nach Anspruch 1, **dadurch gekennzeichnet, dass** die Form (6) mindestens eine zweite Formmulde (12) umfasst so, dass durch Verfahrensschritte a) bis d) mindestens zwei offene Kammern (8, 10) erzeugt werden; wobei der Deckel (11) im Verfahrensschritt e) über die mindestens zwei offene Kammern (8, 10) positioniert wird und der Deckel (11) im Verfahrensschritt f) auf mindestens beide Kammern (8, 10) zur Versiegelung (9) der Portionspackung (1) an einem Versiegelungsbereich (13) aufgebracht wird.

3. Verfahren nach mindestens einem der vorangegangenen Ansprüche, **dadurch gekennzeichnet, dass** neben der Portionspackung (1) gleichzeitig mindestens eine zweite Portionspackung (18) hergestellt wird.

4. Verfahren nach mindestens einem der vorangegangenen Ansprüche, **dadurch gekennzeichnet, dass** hinter der Portionspackung (1) mindestens eine zweite Portionspackung (18) hergestellt wird.

5. Verfahren nach mindestens einem der vorangegangenen Ansprüche, **dadurch gekennzeichnet, dass** die Portionspackung (1) und die zweite Portionspackung (18) durch eine lösbare, vorzugsweise abbrechbare oder abreißbare, Verbindung (19) verknüpft sind.

6. Verfahren nach mindestens einem der vorangegangenen Ansprüche, **dadurch gekennzeichnet, dass** während des Verfahrensschrittes f) die einzelnen Portionspackungen (1) voneinander getrennt und somit vereinzelt werden.

7. Verfahren nach mindestens einem der vorangegangenen Ansprüche, **dadurch gekennzeichnet, dass** die Versiegelung (9) durch Kleben erfolgt.

8. Verfahren nach mindestens einem der vorangegangenen Ansprüche, **dadurch gekennzeichnet, dass** die Versiegelung (9) durch Schweißen erfolgt.

9. Verfahren nach mindestens einem der vorangegangenen Ansprüche, **dadurch gekennzeichnet, dass** der Deckel (11) durch Spritzgießen hergestellt wird.

10. Verfahren nach mindestens einem der vorangegangenen Ansprüche, **dadurch gekennzeichnet, dass** eine Markierung (26) auf dem Deckel (11) erzeugt wird, vorzugsweise beim Spritzgießen gemäß Verfahrensschritt im Anspruch 11.

11. Portionspackung (1) mit mindestens einer Kammer (8), die umhüllt ist durch eine wasserlöslichen Folie (5) und ein Wasch-und/oder Reinigungsmittelprodukt enthält, einem an der wasserlöslichen Folie (5) angebrachten wasserlöslichen Deckel (11), , **dadurch gekennzeichnet, dass** der Deckel (11) formstabil ist, mit einer Dicke von 150-3000µm, vorzugsweise 150-1000µm, eine Innenseite (16) umfasst, die zur Kammer (8) zugewandt ist und topologisch an den Versiegelungsbereich (13) angepasst ist, so dass beim Aufbringen des Deckels (11) auf die Kammer (8) durch die Deckeltopologie eine Selbst-Feinjustierung stattfindet, und eine Außenseite (15) umfasst, die von der Kammer (8) abgewandt ist und eine Markierung (26) aufweist.

## Claims

1. A method for producing portion packs (1), preferably washing and/or cleaning agent portion packs, which contain a product, the method comprising:
a) providing a mold (6) comprising at least one mold cavity;
b) adding a water-soluble film (5) onto the mold cavity;
c) forming an open chamber (8) in the mold cavity by deforming the water-soluble film (5);
d) filling the open chamber (8) with the product;
e) providing a water-soluble and dimensionally stable lid (11), specifically by adding/transferring a strip that comprises at least one lid (11);
f) positioning the lid (11) having a thickness of from 150 to 3000 µm, preferably from 150 to 1000 µm, above the open chamber (8);
g) applying the lid (11) to the chamber (8) in order to seal (9) the portion pack (1) at a sealing region (13), wherein the lid (11) comprises an inner face (16) that faces the chamber (8) and an outer face (15) that faces away from the chamber (8), wherein the inner face (16) is topologically adapted to the sealing region (13) such that, when applying the lid (11) to the chamber (8), an automatic fine adjustment takes place by means of the lid topology.

2. The method according to claim 1, **characterized in that** the mold (6) comprises at least a second mold cavity (12) such that at least two open chambers (8, 10) are created by method steps a) to d); the lid (11) being positioned above the at least two open chambers (8, 10) in method step e), and the lid (11) being applied to at least the two chambers (8, 10) in order to seal (9) the portion pack (1) at a sealing region (13) in method step f).

3. The method according to at least one of the preceding claims, **characterized in that** at least a second portion pack (18) is simultaneously produced in addition to the portion pack (1).

4. The method according to at least one of the preceding claims, **characterized in that** at least one second portion pack (18) is produced after the portion pack (1).

5. The method according to at least one of the preceding claims, **characterized in that** the portion pack (1) and the second portion pack (18) are linked by a detachable, preferably breakable or tearable, connection (19).

6. The method according to at least one of the preceding claims, **characterized in that**,
during method step f), the individual portion packs (1) are separated from one another and therefore isolated.

7. The method according to at least one of the preceding claims, **characterized in that** the sealing (9) occurs by means of adhesion.

8. The method according to at least one of the preceding claims, **characterized in that** the sealing (9) occurs by means of welding.

9. The method according to at least one of the preceding claims, **characterized in that** the lid (11) is produced by injection molding.

10. The method according to at least one of the preceding claims, **characterized in that** a marker (26) is created on the lid (11), preferably during the injection molding according to the method step in claim 11.

11. A portion pack (1) comprising at least one chamber (8) which is encased by a water-soluble film (5) and contains a washing and/or cleaning agent, and a water-soluble lid (11) applied to the water-soluble film (5), **characterized in that** the lid (11) is dimensionally stable, has a thickness of from 150 to 3000 µm, preferably from 150 to 1000 µm, and comprises an inner face (16) that faces the chamber (8) and is topologically adapted to the sealing region (13) such that, when applying the lid (11) to the chamber (8), an automatic fine adjustment takes place by means of the lid topology, and an outer face (15) that faces away from the chamber (8) and has a marker (26).

## Revendications

1. Procédé de fabrication de doses préemballées (1), de préférence de doses préemballées d'agents de lavage et/ou de nettoyage, qui contiennent un produit, comprenant les étapes consistant à :
a) fournir un moule (6) présentant au moins une excavation de moule ;
b) amener un film (5) soluble dans l'eau jusqu'à l'excavation de moule ;
c) former une cavité ouverte (8) dans l'excavation de moule par déformation du film soluble dans l'eau (5) ;
d) remplir la cavité ouverte (8) de produit ;
e) fournir un couvercle (11) de forme stable et soluble dans l'eau, et ce, en amenant/transférant une bande, qui comprend au moins un couvercle (11) ;
f) positionner le couvercle (11) d'une épaisseur de 150 à 3000µm, de préférence de 150 à 1000µm, sur la cavité ouverte (8);
g) appliquer le couvercle (11) sur la cavité (8) pour permettre le scellement (9) de la dose préemballée (1) au niveau d'une zone de scellement (13), le couvercle (11) comprenant une face intérieure (16), qui est tournée vers la cavité (8), et une face extérieure (15), qui est opposée à la cavité (8), la face intérieure (16) étant adaptée topologiquement à la zone de scellement (13), de telle sorte qu'un réglage de précision s'effectue automatiquement du fait de la topologie du couvercle lors de l'application du couvercle (11) sur la cavité (8).

2. Procédé selon la revendication 1, **caractérisé en ce que** le moule (6) comprend au moins une deuxième excavation de moule (12) de telle sorte qu'au moins deux cavités ouvertes (8, 10) sont créées par les étapes de procédé a) à d) ; le couvercle (11) étant positionné à l'étape de procédé e) sur les au moins deux cavités ouvertes (8, 10) et le couvercle (11) étant appliqué à l'étape de procédé f) sur, au moins, les deux cavités (8, 10) pour permettre le scellement (9) de la dose préemballée (1) au niveau d'une zone de scellement (13).

3. Procédé selon au moins l'une des revendications précédentes, **caractérisé en ce qu'**au moins une deuxième dose préemballée (18) est fabriquée simultanément à côté de la dose préemballée (1).

4. Procédé selon au moins l'une des revendications précédentes, **caractérisé en ce qu'**au moins une deuxième dose préemballée (18) est fabriquée derrière la dose préemballée (1).

5. Procédé selon au moins l'une des revendications précédentes, **caractérisé en ce que** la dose préemballée (1) et la deuxième dose préemballée (18) sont reliées par un raccord (19) détachable, de préférence sécable ou déchirable.

6. Procédé selon au moins l'une des revendications précédentes, **caractérisé en ce que**, lors de l'étape de procédé f), les différentes doses préemballées (1) sont séparées les uns des autres et de ce fait individualisées.

7. Procédé selon au moins l'une des revendications précédentes, **caractérisé en ce que** le scellement (9) se fait par collage.

8. Procédé selon au moins l'une des revendications précédentes, **caractérisé en ce que** le scellement (9) se fait par soudure.

9. Procédé selon au moins l'une des revendications précédentes, **caractérisé en ce que** le couvercle (11) est fabriqué par moulage par injection.

10. Procédé selon au moins l'une des revendications précédentes, **caractérisé en ce qu'**un marquage (26) est pratiqué sur le couvercle (11), de préférence par moulage par injection selon l'étape de procédé à la revendication 11.

11. Dose préemballée (1) comportant au moins une cavité (8), qui est enveloppée d'un film soluble dans l'eau (5) et contient un produit d'agent de lavage et/ou de nettoyage, un couvercle (11) soluble dans l'eau appliqué sur le film soluble dans l'eau (5), **caractérisée en ce que** le couvercle (11) est de forme stable, d'une épaisseur de 150 à 3000µm, de préférence 150 à 1000µm, comprend une face intérieure (16), qui est tournée vers la cavité (8) et est adaptée topologiquement à la zone de scellement (13), de telle sorte qu'un réglage de précision s'effectue automatiquement du fait de la topologie du couvercle lors de l'application du couvercle (11) sur la cavité (8), comprend une face extérieure (15), qui est opposée à la cavité (8), et présente un marquage (26).
